# EUROPÄISCHE PATENTSCHRIFT

(11) **EP 2 802 472 B1**
(45) Veröffentlichungstag und Bekanntmachung des Hinweises auf die Patenterteilung: **03.03.2021**
(21) Anmeldenummer: 13708659.1
(22) Anmeldetag: 11.01.2013
(51) Int. Cl.: B60J 10/34, B60J 10/35, B60J 10/80

(54) **KFZ-DICHTUNG**
VEHICLE SEALING STRIP
JOINT D'ÉTANCHÉITÉ POUR VÉHICULE

(30) Priorität: 13.01.2012 DE 102012100300
(43) Veröffentlichungstag der Anmeldung: 19.11.2014
(73) Patentinhaber: CQLT SaarGummi Technologies S.à.r.l., 5544 Remich (LU)
(72) Erfinder: KAST, Christian, 66683 Merzig-Brotdorf (DE); MICHAELY, Frank, 66687 Wadern-Nunkirchen (DE)
(74) Vertreter: Patentanwälte Bernhardt / Wolff Partnerschaft mbB
(86) Internationale Anmeldenummer: PCT/DE2013/100007
(87) Internationale Veröffentlichungsnummer: WO 2013/104358

(56) Entgegenhaltungen:
- EP-A1- 0 825 052
- EP-A1- 1 375 225
- EP-A1- 1 419 919
- EP-A1- 1 845 229
- DE-A1- 10 043 136
- DE-T2- 60 317 567
- US-A1- 2007 245 634

## Beschreibung

Die Erfindung betrifft eine Zusammenstellung umfassend eine Fahrzeugkarosserie, eine an einer Tür- oder Öffnungsklappe der Fahrzeugkarosserie umlaufende Dichtung oder/und Abdeckung mit einem ein Elastomermaterial aufweisenden flexiblen Strang und eine sich in Stranglängsrichtung erstreckende, den Strang mit der Fahrzeugkarosserie verbindende Klebermaterialschicht.

Bekanntermaßen wird im Fertigungsprozess zur Verbindung extrudierter Dichtungsstränge mit Fahrzeugkarosserien doppelt klebendes Klebeband eingesetzt, wie dies z.B. aus der US 2007/0245634 A1 bekannt ist. Die Verbindung wird also über zwei Kleberschichten hergestellt.

Eine Dichtung der eingangs genannten Art mit einer einzigen Klebermaterialschicht geht aus der WO 02/076 778 A1 hervor. Ein Trägerprofil eines mehrteiligen Dichtungsstrangs, das einrastend mit einem Dichtungsabschnitt des Strangs verbindbar ist, wird fortlaufend unter ständiger Zufuhr von Klebermaterial an einem Dichtungssitz einer Karosserie befestigt. Im Reparaturfall lässt sich der durch das Trägerprofil gehaltene Dichtungsabschnitt des Dichtungsstrangs leicht ablösen und gegen ein entsprechendes Ersatzteil austauschen. Bei Beschädigung auch des Trägerprofils erfordert dessen Loslösung von der Karosserie einen hohen Reparaturaufwand. Eine weitere Dichtung der eingangs erwähnten Art mit einer einzigen Klebermaterialschicht ist aus der EP 1 419 919 A bekannt.

Der Erfindung liegt die Aufgabe zugrunde, eine neue, effizient applizierbare und reparaturfreundliche Dichtung der eingangs erwähnten Art zu schaffen.

Die diese Aufgabe lösende Zusammenstellung nach der Erfindung ist durch die Merkmale von Anspruch 1 gekennzeichnet.

Erßfindungsgemäß bleibt im Reparaturfall beim Abziehen des ggf. beschädigten Dichtungsstrangs eine saubere, von Abrissresten weitgehend freie und ohne aufwendige Nachbearbeitung unmittelbar mit einem Ersatzteilstrang verbindbare Klebefläche zurück.

Der Strang ist unter Zurücklassung einer solchen Klebefläche von der kompletten Klebermaterialschicht oder zusammen mit der Klebermaterialschicht von der Karosserie abziehbar. Zum Beispiel haftet im ersteren Fall das Klebermaterial der Klebermaterialschicht als solches stärker am Lack der Karosserie als an dem Elastomermaterial des Strangs an, im zweiten Fall ist umgekehrt die Klebeverbindung zwischen dem Elastomermaterial des Strangs und der Klebermaterialschicht fester als zwischen der Klebermaterialschicht und dem Karosserielack.

In einer nicht erfindungsgemäßen Variante kann sich der Strang beim Abziehen zusammen mit einem Teil der Klebermaterialschicht von einem auf der Karosserie verbleibenden Teil der Klebermaterialschicht lösen. In diesem Fall übertrifft die Haftfestigkeit des Klebermaterials sowohl am Elastomermaterial des Strangs als auch am Lack der Karosserie die Zerreißfestigkeit der Klebermaterialschicht als solcher.

In einer weiteren Ausführungsform der Erfindung ist die Klebermaterialschicht mit dem Strang oder der Karosserie über eine Trennschicht verbunden, welche die Ablösung an den betreffenden Schichtgrenzen erleichtert.

Vorzugsweise haftet die Trennschicht an der Klebermaterialschicht stärker als an dem Strang oder der Karosserie an. So bleibt beim Abziehen des Strangs entweder die Trennschicht mit der Klebermaterialschicht zurück oder die gesamte Dichtung einschließlich der Klebermaterial- und Trennschicht wird unter Freilegung des Karosserielacks entfernt.

Alternativ kann der Strang beim Abziehen zusammen mit der Trennschicht von der Klebermaterialschicht oder zusammen mit einem Teil der Trennschicht von einem auf der Klebermaterialschicht verbleibenden Teil des Trennschicht lösbar sein.

Vorzugsweise ist die Trennschicht mit dem Strang vorgefertigt, insbesondere mitextrudiert.

Die Trennschicht kann eine die Haftung der Klebermaterialschicht am Elastomermaterial oder Karosserielack, insbesondere dessen Benetzung durch das Klebermaterial herabsetzen. Alternativ ist sie aus einem Material, z.B. geschäumtem Elastomermaterial, gebildet, dessen Zerreißfestigkeit so gering ist, dass die Trennschicht als solche zerreißt und eine Sollbruchstelle bildet.

Insbesondere kann die Trennschicht ein Textilmaterial oder perforiertes Folienmaterial aufweisen.

Für den Fall, dass die Trennschicht, entsprechend einer weiteren Ausführungsform, an Schwachstellen von dem übrigen Strang lösbar ist, kann die Trennschicht aus demselben Elastomermaterial wie der übrige Strang bestehen.

In weiterer Ausgestaltung der Erfindung kann der Strang eine die Klebermaterial- oder/und Trennschicht wenigstens teilweise aufnehmende, zur Karosserie hin offene Ausnehmung aufweisen.

Insbesondere in einer solchen Ausführungsform kann die ausgehärtete Klebermaterialschicht oder/und Trennschicht einen Montagesitz für den als Ersatzteil zu montierenden Strang bilden, der die passgenaue Anordnung des Ersatzteilstrangs wesentlich erleichtert.

In weiterer Ausgestaltung der Erfindung weist der Strang eine oder mehrere Ausnehmungen für die Aufnahme überschüssigen Klebermaterials auf. Hierbei kann es sich insbesondere um Längs- oder Querrillen handeln. Die Ausnehmung für die Aufnahme überschüssigen Klebermaterials kann auch durch eine Erweiterung der weiter oben erwähnten Ausnehmung gebildet sein.

Zur Bildung der Klebermaterialschicht ist zweckmäßig ein pastöser Kleberstoff vorgesehen, der im Dichtungssitz vorhandene Unebenheiten, wie Vertiefungen an Schweißpunkten oder Absätze an Überlappungsstellen des Karosseriebleches ausgleichen kann.

Als pastöse Klebestoffe kommen vor allem reaktive heißschmelzende Klebestoffe in Betracht.

Alternativ ließe sich das Klebermaterial durch eine thermoplastische Folie bilden, die erst durch Erwärmung klebfähig gemacht wird.

In einer besonders bevorzugten Ausführungsform ist dieses thermoplastische Folienmaterial mehrlagig mit beim Abziehen des Strangs voneinander trennbaren Lagen ausgebildet. Auch das thermoplastische Folienmaterial lässt sich mit dem Strang vorfertigen, insbesondere mitextrudieren.

Die Erfindung wird nachfolgend anhand von Ausführungsbeispielen und der beiliegenden, sich auf diese Ausführungsbeispiele beziehenden Zeichnungen weiter erläutert. Es zeigen:
- Fig. 1 und 2: Querschnittsdarstellungen von Ausführungsbeispielen für erfindungsgemäße Dichtungen mit einer Klebermaterialschicht, die einen Montagesitz zur Aufnahme eines Ersatzteilstrangs bildet,
- Fig. 3 und 4: Ausführungsbeispiele für erfindungsgemäße Dichtungen mit einer Trennschicht zwischen einem Strang und einer Klebermaterialschicht im Querschnitt,
- Fig.5 und 6: Ausführungsbeispiele für erfindungsgemäße Dichtungen mit Aufnahmebereichen für überschüssiges Klebermaterial und mit Schwachstellen im Querschnitt, und
- Fig. 7 und 8: Querschnittsdarstellungen von Ausführungsbeispielen für erfindungsgemäße Dichtungen mit an Schwachstellen von einem Strang lösbaren Trennschichten.

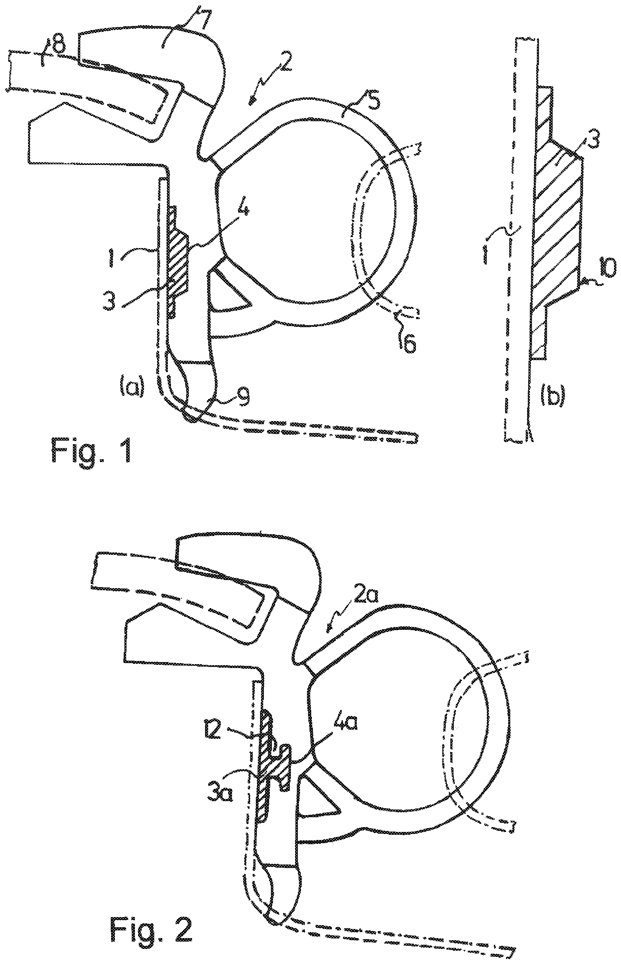

Eine in Fig. 1 gezeigte Dichtung an einer Fahrzeugtür ist mit einem am Türöffnungsrand umlaufenden Karosserieflansch 1 verbunden. Die Türdichtung umfasst einen extrudierten Strang 2 aus Elastomermaterial und eine den Strang 2 mit dem Flansch 1 unmittelbar verbindende Klebermaterialschicht 3. Die Klebermaterialschicht 3 befindet sich innerhalb einer zum Flansch 1 hin offenen, im Strang 2 vorgesehenen Ausnehmung 4. Ein schlauchförmiger Dichtungsabschnitt 5 des Strangs 2 liegt bei geschlossener Fahrzeugtür gegen eine bei 6 angedeutete, am Rand der Fahrzeugtür umlaufende weitere Dichtung an. Der Strang 2 umfasst ferner einen U-förmigen Abschnitt 7, in den eine Fahrzeuginnenverkleidung 8 mit ihrem Rand eingreift. Eine Dichtzunge 9 des Strangs 9 liegt angrenzend an den Flansch 1 gegen die Fahrzeugkarosserie an.

In dem gezeigten Ausführungsbeispiel wurde der Strang 2 als Endlosstrang fortlaufend auf den Karosserieflansch 1 aufgerollt und entsprechend der Umfangslänge der Dichtung abgetrennt, wobei dem zugeführten Strang vor der Klebeverbindung mit dem Flansch 1 laufend unter Auffüllung der Ausnehmung 4 die Klebermaterialschicht 3 bildendes Klebermaterial zugeleitet wurde. Alternativ könnte das Klebermaterial schon beim Herstellen des Strangs appliziert und die gefüllte Ausnehmung 4 durch einen vor dem Aufrollen des Strangs auf den Flansch zu entfernenden Folienstreifen abgedeckt werden. Die zweite Alternative kommt vor allem in Betracht, wenn die Aushärtung des Klebermaterials erst nach der Applikation des Strangs auf den Flansch, z.B. durch Wärmezuführung, eingeleitet wird.

Das verwendete Klebermaterial der Klebermaterialschicht 3 haftet am Lack der Karosserie stärker an als am Elastomermaterial des Strangs 2. Der Strang 2 lässt sich dadurch z.B. im Falle einer notwendigen Reparatur problemlos gegen einen Ersatzteilstrang auswechseln, indem beim Abziehen des Strangs 2 von der ausgehärteten Klebermaterialschicht 3 ein sauberer, von abgerissenen Elastomermaterialresten freier Montagesitz 10 für den Ersatzteilstrang zurück bleibt (Fig. 1b). Der durch das ausgehärtete Klebermaterial der Klebermaterialschicht 3 gebildete Montagesitz 10, der in eine der Ausnehmung 4 entsprechende Ausnehmung im Ersatzteilstrang eingreift, erleichtert erheblich die positionsgenaue Anbringung des Ersatzteilstrangs am Fahrzeug. Die saubere, rückstandsfreie Oberfläche des Montagesitzes ermöglicht ohne aufwendige Nachbearbeitung eine Verklebung mit dem Ersatzteilstrang.

In den nachfolgenden Figuren sind gleiche oder gleichwirkende Teile mit derselben Bezugszahl wie in Fig. 1 bezeichnet, wobei der betreffenden Bezugszahl der Buchstabe a, b usw. beigefügt ist.

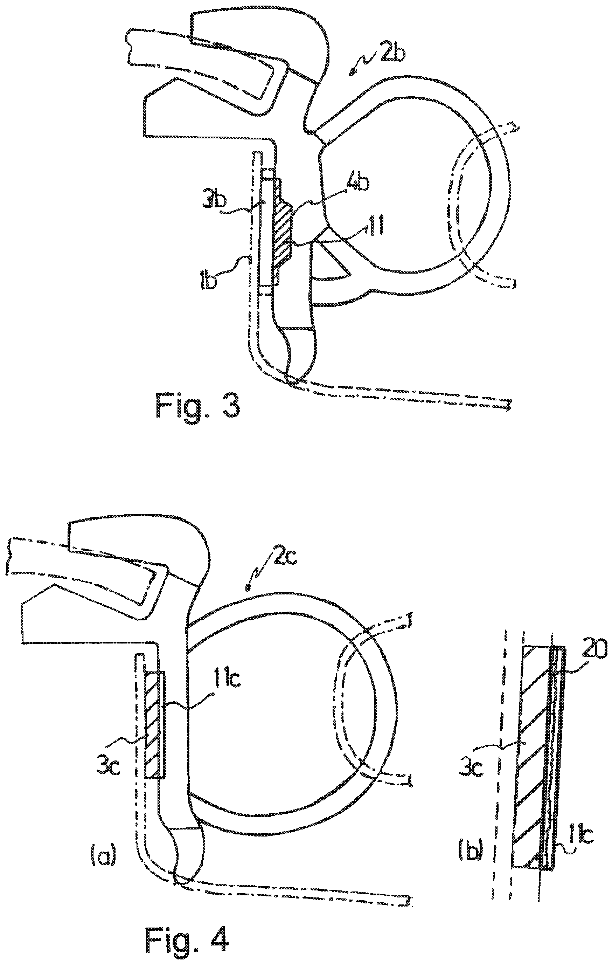

Wie Fig. 2 erkennen lässt, könnte ein durch eine ausgehärtete Klebermaterialschicht 3a gebildeter Montagesitz Hinterschneidungen 12 aufweisen, so dass ein Ersatzteilstrang mit einer Ausnehmung, welche der die Klebermaterialschicht 3a aufnehmenden Ausnehmung 4a des gezeigten Strangs 2a entspricht, an dem Montagesitz einrasten könnte. Ein solcher Montagesitz ließe sich auch durch eine Trennschicht gemäß Fig. 4 bilden.

Ein in Fig. 3 gezeigtes Ausführungsbeispiel für eine Türdichtung umfasst eine Klebermaterialschicht 3b, die sich im Unterschied zu den Ausführungsbeispielen von Fig. 1 und 2 außerhalb einer im Strang 2b gebildeten Ausnehmung 4b befindet. Die Ausnehmung 4b selbst ist mit einer Trennschicht 11 ausgefüllt.

Die Haftung des Strangs 2b an der Trennschicht 11 ist schwächer als die Haftung der Trennschicht 11 an der Klebermaterialschicht 3b und auch schwächer als die Haftung der Klebermaterialschicht 3b am Karosserieflansch 1b. Der Strang 2b lässt sich daher im Reparaturfall problemlos von der Trennschicht 11 abziehen, und es entsteht, wie bei den Ausführungsbeispielen von Fig. 1 und 3, ein Montagesitz mit einer sauberen, unmittelbar zur Verklebung mit einem Ersatzteilstrang geeigneten Oberfläche.

Zweckmäßig ist die Trennschicht 11 bei der Herstellung des Stranges 2b mit dem Strang 2b mitextrudiert.

Gemäß Fig. 4 ist eine im Vergleich zu der Trennschicht 11 dünnere Trennschicht 11c gebildet, die am Elastomermaterial eines Strangs 2c fester anhaftet als die Trennschicht 11 an dem Strang 2b. Die Trennschicht 11c weist eine geringe Zerreißfestigkeit auf, so dass sie beim Abziehen des Strangs 2c in sich reißt, wobei sie eine zur Verklebung mit einem Ersatzteilstrang ausreichend glatte Bruchfläche 20 bildet (Fig. 4b). Die mit dem Strang 2c mitextrudierte Trennschicht 11c besteht in dem gezeigten Ausführungsbeispiel aus einem geschäumten Elastomermaterial, z.B. Moosgummi.

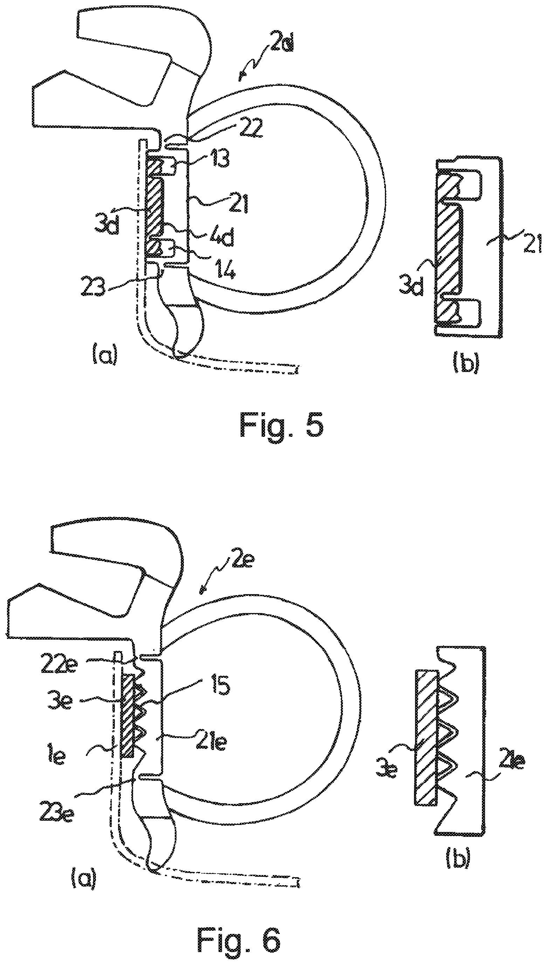

Bei einem in Fig. 5 gezeigten Ausführungsbeispiel für eine Türdichtung weist ein Strang 2d eine Ausnehmung 4d für die Aufnahme einer Klebermaterialschicht 3d auf. In der Ausnehmung 4d sind Bereiche 13 und 14 für die Aufnahme überschüssigen Klebermaterials vorgesehen. Vorteilhaft können durch solche Bereiche Schwankungen der Zufuhrmenge des Klebermaterials, insbesondere während einer Applikation des Strangs 2d als Endlosstrang, ausgeglichen werden. Ein die Ausnehmung 4d mit den Bereichen 13,14 aufweisender Abschnitt 21 des Strangs 2d ist mit dem übrigen Strang über Schwachstellen 22 und 23 verbunden.

Beim Abziehen des Strangs reißt der Strang an den Schwachstellen und es verbleibt ein durch die ausgehärtete Klebermaterialschicht 3d und den Abschnitt 21 gebildeter Montagesitz 10d (Fig. 5b).

Bei einem in Fig. 6 gezeigten Ausführungsbeispiel weist ein Strang 2e in einer einem Flansch 1e zugewandten Klebefläche mehrere Aufnahmerillen 15 für überschüssiges Klebermaterial einer zwischen der Klebefläche und dem Strang 2e gebildeten Klebermaterialschicht 3e auf. Ein die Aufnahmerillen 15 aufweisender Abschnitt 21e des Strangs 2e ist über Schwachstellen 22e und 23e mit dem übrigen Strang verbunden. Beim Abziehen des Strangs verbleibt ein durch die Kleberschicht 3e und den Abschnitt 21e gebildeter Montagesitz.

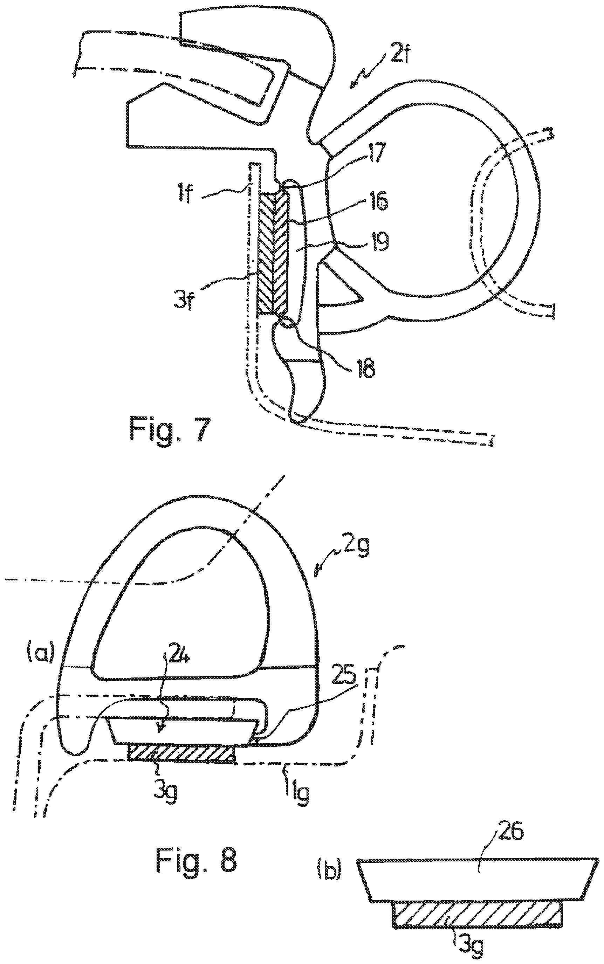

Ein in Fig. 7 gezeigtes Ausführungsbeispiel einer weiteren Türdichtung umfasst eine Klebermaterialschicht 3f, die einen Abschnitt 16 eines Strangs 2f mit einem Karosserieflansch 1f verbindet. Der Abschnitt 16 ist durch einen Hohlraum 19 vom übrigen Strang 2f abgetrennt und nur über Schwachstellen 17 und 18 mit dem übrigen Strang 2f verbunden.

Im Reparaturfall lässt sich der Strang 2f problemlos unter Zerstörung der Schwachstellen 17,18 abziehen, wobei ein durch den Abschnitt 16 und die Klebermaterialschicht 3e gebildeter Montagesitz für einen Ersatzteilstrang zurück bleibt. Der Ersatzteilstrang kann eine dem Montagesitz entsprechende Ausnehmung aufweisen.

Fig. 8 zeigt eine Dichtung mit einem Strang 2g, der an einer Lippe 24 über eine Klebermaterialschicht 3g mit einer Fahrzeugtür 1g verklebt ist. Die Lippe 24 weist bei 25 eine Sollbruchstelle auf.

Beim Abziehen des Strangs 2g reißt der Strang an der Sollbruchstelle 25. Zurück bleibt ein durch die Klebermaterialschicht 3d und einen abgetrennten Abschnitt 26 des Strangs 2g gebildeter Montagesitz.

## Patentansprüche

1. Zusammenstellung umfassend eine Fahrzeugkarosserie (1), eine an einer Tür- oder Öffnungsklappe der Fahrzeugkarosserie (1) umlaufende Dichtung oder/und Abdeckung mit einem ein Elastomermaterial aufweisenden flexiblen Strang (2) und eine sich in Stranglängsrichtung erstreckende, den Strang (2) mit der Fahrzeugkarosserie (1) verbindende Klebermaterialschicht (3),
**dadurch gekennzeichnet,**
**dass** die Zerreißfestigkeit der Klebermaterialschicht (3) die Haftfestigkeit des Klebermaterials am Elastomermaterial des Strangs und/oder die Haftfestigkeit des Klebermaterials an einem Lack der Karosserie übertrifft, so dass der Strang (2) unter Hinterlassen einer von Abrissresten freien Klebefläche von der kompletten Klebermaterialschicht (3) oder zusammen mit der Klebermaterialschicht (3) von der Karosserie abziehbar ist, zwecks Verklebung der Karosserie (1) mit einem Ersatzteilstrang.

2. Zusammenstellung nach Anspruch 1,
**dadurch gekennzeichnet,**
**dass** der Strang (2) von der kompletten Klebermaterialschicht (3) oder zusammen mit der kompletten Klebermaterialschicht (3) von der Karosserie (1) oder zusammen mit einem Teil der Klebermaterialschicht von einem auf der Karosserie verbleibenden Teil der Klebermaterialschicht abziehbar ist.

3. Zusammenstellung nach Anspruch 1 oder 2,
**dadurch gekennzeichnet,**
**dass** das Klebermaterial der Klebermaterialschicht (3) stärker an dem Elastomermaterial des Strangs (2) als am Lack der Karosserie oder umgekehrt das Klebermaterial stärker am Lack der Karosserie (1) als am Elastomermaterial des Strangs (2) anhaftet.

4. Zusammenstellung nach einem der Ansprüche 1 bis 3,
**dadurch gekennzeichnet,**
**dass** die Klebermaterialschicht (3) mit dem Strang (2) oder der Karosserie über eine Trennschicht (11;16;21;24) verbunden ist.

5. Zusammenstellung nach Anspruch 4,
**dadurch gekennzeichnet,**
**dass** die Trennschicht (11;16;21;24) mit dem Strang (2)vorgefertigt ist, insbesondere mitextrudiert ist.

6. Zusammenstellung nach Anspruch 4 oder 5,
**dadurch gekennzeichnet,**
**dass** der Strang (2) zusammen mit der Trennschicht (11) von der Klebermaterialschicht, zusammen mit einem Teil der Trennschicht (11c) von einem auf der Klebermaterialschicht (3c) verbleibenden Teil der Trennschicht (11c) oder von der gesamten, auf der Klebermaterialschicht (3) verbleibenden Trennschicht (11;16;21;24) abziehbar ist.

7. Zusammenstellung nach einem der Ansprüche 4 bis 6,
**dadurch gekennzeichnet,**
**dass** die Trennschicht die Haftung des Strangs (2) oder der Karosserie (1) an der Klebermaterialschicht herabsetzt oder/und aus einem Material geringer Zerreißfestigkeit besteht, durch das eine Sollbruchstelle gebildet ist.

8. Zusammenstellung nach einem der Ansprüche 4 bis 7,
**dadurch gekennzeichnet,**
**dass** die Trennschicht (11) den Benetzungsgrad des Strangs (2) oder der Karosserie (1) durch das Klebermaterial der Klebermaterialschicht herabsetzt.

9. Zusammenstellung nach einem der Ansprüche 4 bis 8,
**dadurch gekennzeichnet,**
**dass** die Trennschicht (16; 21; 24) über Sollbruchstellen (17,18; 22,23; 25) mit dem übrigen Strang (2) verbunden ist.

10. Zusammenstellung nach einem der Ansprüche 1 bis 9.
**dadurch gekennzeichnet,**
**dass** der Strang (2) eine die Klebermaterial- oder/und Trennschicht (11) wenigstens teilweise aufnehmende Ausnehmung (4) aufweist.

11. Zusammenstellung nach Anspruch 10,
**dadurch gekennzeichnet,**
**dass** durch die ausgehärtete Klebermaterialschicht (3) oder /und Trennschicht (11;16;21;24) ein Montagesitz (10) für den Ersatzteilstrang gebildet ist.

12. Zusammenstellung nach einem der Ansprüche 1 bis 11,
**dadurch gekennzeichnet,**
**dass** der Strang (2) eine Ausnehmung (13,14; 15) für die Aufnahme überschüssigen Klebermaterials aufweist.

13. Zusammenstellung nach einem der Ansprüche 1 bis 12,
**dadurch gekennzeichnet,**
**dass** zur Bildung der Klebermaterialschicht (3) ein pastöser Klebestoff, ein Hotmelt-Klebstoff, ein Klebstoff auf PU-Basis oder ein thermoplastisches Folienmaterial vorgesehen ist.

14. Zusammenstellung nach Anspruch 13,
**dadurch gekennzeichnet,**
**dass** das thermoplastische Folienmaterial mehrlagig mit beim Abziehen des Strangs (2) voneinander trennbaren Lagen ausgebildet ist.

15. Zusammenstellung nach Anspruch 13 oder 14,
**dadurch gekennzeichnet,**
**dass** das thermoplastische Folienmaterial mit dem Strang vorgefertigt, insbesondere mitextrudiert, ist.

## Claims

1. Assembly comprising a vehicle body (1), a seal or/and mask which encircles a door flap or opening flap of the vehicle body (1) and has a flexible strand (2) comprising an elastomer material, and an adhesive-material layer (3) which extends in the longitudinal direction of the strand and connects the strand (2) to the vehicle body (1),
**characterized in that**
the tear resistance of the adhesive-material layer (3) exceeds the adhesive strength of the adhesive material to the elastomer material of the strand and/or the adhesive strength of the adhesive material to a lacquer of the body, such that the strand (2) can be pulled off from the complete adhesive-material layer (3) or together with the adhesive-material layer (3) from the body to leave behind an adhesive surface free of tear-off residues, for the purpose of adhesively bonding the body (1) to a substitute strand.

2. Assembly according to Claim 1,
**characterized in that**
the strand (2) can be pulled off from the complete adhesive-material layer (3) or together with the complete adhesive-material layer (3) from the body (1) or together with a part of the adhesive-material layer from a part of the adhesive-material layer that remains on the body.

3. Assembly according to Claim 1 or 2,
**characterized in that**
the adhesive material of the adhesive-material layer (3) adheres more strongly to the elastomer material of the strand (2) than to the lacquer of the body, or, vice versa, the adhesive material adheres more strongly to the lacquer of the body (1) than to the elastomer material of the strand (2).

4. Assembly according to one of Claims 1 to 3,
**characterized in that**
the adhesive-material layer (3) is connected to the strand (2) or the body via a separating layer (11; 16; 21; 24).

5. Assembly according to Claim 4,
**characterized in that**
the separating layer (11; 16; 21; 24) is prefabricated, in particular coextruded, with the strand (2).

6. Assembly according to Claim 4 or 5,
**characterized in that**
the strand (2) can be pulled off together with the separating layer (11) from the adhesive-material layer, together with a part of the separating layer (11c) from a part of the separating layer (11c) that remains on the adhesive-material layer (3c), or from the entire separating layer (11; 16; 21; 24) remaining on the adhesive-material layer (3).

7. Assembly according to one of Claims 4 to 6,
**characterized in that**
the separating layer reduces the degree of adhesion of the strand (2) or the body (1) to the adhesive-material layer or/and consists of a material with lower tearing resistance that forms a predetermined breaking point.

8. Assembly according to one of Claims 4 to 7,
**characterized in that**
the separating layer (11) reduces the degree of wetting of the strand (2) or the body (1) owing to the adhesive material of the adhesive-material layer.

9. Assembly according to one of Claims 4 to 8,
**characterized in that**
the separating layer (16; 21; 24) is connected to the rest of the strand (2) via predetermined breaking points (17, 18; 22, 23; 25).

10. Assembly according to one of Claims 1 to 9,
**characterized in that**
the strand (2) has a recess (4) which at least partially accommodates the adhesive-material layer or/and separating layer (11).

11. Assembly according to Claim 10,
**characterized in that**
a mounting seat (10) for the substitute strand is formed by the hardened adhesive-material layer (3) or/and separating layer (11; 16; 21; 24).

12. Assembly according to one of Claims 1 to 11,
**characterized in that**
the strand (2) has a recess (13, 14; 15) for accommodating excess adhesive material.

13. Assembly according to one of Claims 1 to 12,
**characterized in that**,
in order to form the adhesive-material layer (3), a pasty adhesive, a hotmelt adhesive, a PU-based adhesive or a thermoplastic film material is provided.

14. Assembly according to Claim 13,
**characterized in that**
the thermoplastic film material has a multi-layer form with layers which can be separated from one another when the strand (2) is being pulled off.

15. Assembly according to Claim 13 or 14,
**characterized in that**
the thermoplastic film material is prefabricated, in particular coextruded, with the strand.

## Revendications

1. Assemblage comprenant une carrosserie de véhicule (1), un joint d'étanchéité et/ou un recouvrement périphérique au niveau d'une portière ou d'un hayon de la carrosserie de véhicule (1) présentant un boudin (2) souple présentant un matériau élastomère et une couche de matériau adhésif (3) s'étendant dans la direction longitudinale du boudin, reliant le boudin (2) à la carrosserie de véhicule (1), **caractérisé en ce que** la résistance à la déchirure de la couche de matériau adhésif (3) est supérieure à l'adhésivité du matériau adhésif au matériau élastomère du boudin et/ou à l'adhésivité du matériau adhésif à une laque de la carrosserie de telle sorte que le boudin (2) peut être retiré en laissant une surface adhésive exempte de restes de déchirure de toute la couche de matériau adhésif (3) ou de la carrosserie conjointement avec la couche de matériau adhésif (3), en vue d'un collage d'un boudin de remplacement sur la carrosserie (1).

2. Assemblage selon la revendication 1, **caractérisé en ce que** le boudin (2) peut être retiré de toute la couche de matériau adhésif (3) ou conjointement avec toute la couche de matériau adhésif (3) de la carrosserie (1) ou conjointement avec une partie de la couche de matériau adhésif d'une partie de la couche de matériau adhésif restant sur la carrosserie.

3. Assemblage selon la revendication 1 ou 2, **caractérisé en ce que** le matériau adhésif de la couche de matériau adhésif (3) adhère plus fortement au matériau élastomère du boudin (2) qu'à la laque de la carrosserie ou inversement **en ce que** le matériau adhésif adhère plus fortement à la laque de la carrosserie (1) qu'au matériau élastomère du boudin (2).

4. Assemblage selon l'une quelconque des revendications 1 à 3, **caractérisé en ce que** la couche de matériau adhésif (3) est reliée au boudin (2) ou à la carrosserie via une couche de séparation (11 ; 16 ; 21 ; 24).

5. Assemblage selon la revendication 4, **caractérisé en ce que** la couche de séparation (11; 16; 21 ; 24) est préfabriquée avec le boudin (2), en particulier coextrudée.

6. Assemblage selon la revendication 4 ou 5, **caractérisé en ce que** le boudin (2) peut être retiré de la couche de matériau adhésif conjointement avec la couche de séparation (11), d'une partie de la couche de séparation (11c) restant sur la couche de matériau adhésif (3c) conjointement avec une partie de la couche de séparation (11c) ou de toute la couche de séparation (11 ; 16; 21 ; 24) restant sur la couche de matériau adhésif (3).

7. Assemblage selon l'une quelconque des revendications 4 à 6, **caractérisé en ce que** la couche de séparation diminue l'adhérence du boudin (2) ou de la carrosserie (1) à la couche de matériau adhésif et/ou est constituée par un matériau présentant une résistance inférieure à la déchirure, qui forme un point de rupture.

8. Assemblage selon l'une quelconque des revendications 4 à 7, **caractérisé en ce que** la couche de séparation (11) diminue le degré de mouillage du boudin (2) ou de la carrosserie (1) par le matériau adhésif de la couche de matériau adhésif.

9. Assemblage selon l'une quelconque des revendications 4 à 8, **caractérisé en ce que** la couche de séparation (16; 21 ; 24) est reliée au reste du boudin (2) via des points de rupture (17, 18; 22, 23 ; 25).

10. Assemblage selon l'une quelconque des revendications 1 à 9, **caractérisé en ce que** le boudin (2) présente un évidement (4) recevant au moins en partie la couche de matériau adhésif et/ou la couche de séparation (11).

11. Assemblage selon la revendication 10, **caractérisé en ce que** la couche durcie de matériau adhésif (3) et/ou la couche de séparation (11 ; 16; 21 ; 24) forme(nt) un siège de montage (10) pour le boudin de remplacement.

12. Assemblage selon l'une quelconque des revendications 1 à 11, **caractérisé en ce que** le boudin (2) présente un évidement (13, 14; 15) pour recevoir du matériau adhésif en excès.

13. Assemblage selon l'une quelconque des revendications 1 à 12, **caractérisé en ce qu'**un adhésif pâteux, un adhésif thermofusible, un adhésif à base de PU ou un matériau thermoplastique en feuille est utilisé pour former la couche de matériau adhésif (3).

14. Assemblage selon la revendication 13, **caractérisé en ce que** le matériau thermoplastique en feuille est multicouche présentant des couches séparables les unes des autres lors du retrait du boudin (2).

15. Assemblage selon la revendication 13 ou 14, **caractérisé en ce que** le matériau thermoplastique en feuille est préfabriqué avec le boudin, en particulier coextrudé.
